# EUROPÄISCHE PATENTANMELDUNG

(11) **EP 4 593 281 A1**
(43) Veröffentlichungstag der Anmeldung: **30.07.2025**
(21) Anmeldenummer: 24220461.8
(22) Anmeldetag: 17.12.2024
(51) Int. Cl.: H02P 1/58, H02P 5/74

(54) **ANTRIEBSSYSTEM**

(30) Priorität: 26.01.2024 DE 102024102276
(71) Anmelder: Miele & Cie. KG, 33332 Gütersloh (DE)
(72) Erfinder: Neufeld, Alexander, 33619 Bielefeld (DE); Balzer, Eugen, 33729 Bielefeld (DE); Sammoud, Hafedh, 8090 Kelibia (TN)

(57) **Zusammenfassung**

Die Erfindung betrifft ein Antriebssystem mit einem dreiphasigen Motor (M1), mit einem einphasigen Motor (M2) und mit einer Drehstrombrücke, welche ausgebildet ist, den dreiphasigen Motor (M1) und den einphasigen Motor (M2) zu speisen, wobei das Antriebssystem, vorzugweise eine Steuerungseinheit des Antriebssystems, ausgebildet ist,
• den dreiphasigen Motor (M1) und den einphasigen Motor (M2) einzeln unter Volllast oder
• den dreiphasigen Motor (M1) und den einphasigen Motor (M2) gemeinsam jeweils unter Teillast
zu betreiben.

## Beschreibung

Die Erfindung betrifft ein Antriebssystem sowie ein Haushaltsgerät mit einem derartigen Antriebssystem.

Zu den elektrischen Motoren gehören die Synchronmotoren, welche einphasig mit Wechselstrom oder mehrphasig mit Drehstrom betrieben werden können. In jedem Fall wird ein konstant magnetisierter Läufer verwendet, welcher auch als Rotor bezeichnet werden kann. Hierzu können Permanentmagnete oder eine elektromagnetische Fremderregung verwendet werden. Die Bezeichnung Synchronmotor resultiert daraus, dass der Rotor von einem bewegten magnetischen Drehfeld im Ständer, auch Stator genannt, synchron mitgenommen wird. Somit weist der Synchronmotor im Betrieb eine zur Wechselspannung synchrone Bewegung auf, dessen Drehzahl über die Polpaarzahl des Stators des Synchronmotors mit der Frequenz der Wechselspannung verknüpft ist.

Mehrsträngige Permanentmagnet-Synchronmotoren werden üblicherweise über einen Frequenzumrichter betrieben, wodurch ein geregelter Betrieb ermöglicht wird, indem Drehrichtung, Drehzahl und Drehmoment des Synchronmotors über die Frequenz und die Amplitude der Ausgangswechselspannung des Frequenzumrichters vorgegeben werden. Dies kann das Drehverhalten des Synchronmotors z.B. beim Anlauf sowie in Abhängigkeit der anzutreibenden Last gezielt beeinflussen.

Nachteilig ist hierbei, dass derartige Frequenzumrichter zusätzliche Kosten verursachen und zusätzlichen Bauraum benötigen können. Neben dem Frequenzumrichter selbst können diese Kosten durch weitere Elektronik im Antriebssystem entstehen. Gerade diese Kosten sind bei verschiedenen einfachen Anwendungen wie z.B. bei einfachen Pumpen wie z.B. bei Laugenpumpen in Waschmaschinen höchst unerwünscht, weil die durch den Frequenzumrichter geschaffenen Möglichkeiten der Regelung bzw. der Steuerung des Synchronmotors für diese Anwendungen gar nicht benötigt werden und sich somit die Mehrkosten des Frequenzumrichters nicht rentieren. Zu derartigen einfachen Anwendungen wie z.B. bei Laugenpumpen in Waschmaschinen gehören das Abpumpen der Lauge aus dem Waschraum oder das Umfluten. In beiden Fällen ist ein geregelter Betrieb des jeweiligen Pumpenmotors nicht erforderlich.

Als kostengünstige Alternative zu mittels Frequenzumrichtern betriebenen Synchronmotoren ist es bei einfachen Anwendungen wie z.B. bei Laugenpumpen in Waschmaschinen bekannt ungeregelte Einphasen-Synchronmotoren als Antriebe z.B. von Laugenpumpen einzusetzen. Hierbei werden üblicherweise permanenterregte Einphasen-Synchronmotoren eingesetzt, so dass auf einen elektrischen Kontakt vom Stator zum Rotor mittels Schleifringen oder Bürsten verzichtet werden kann.

Wie bereits allgemein erwähnt ist es auch bei permanenterregten Einphasen-Synchronmotoren vorteilhaft, dass diese im Betrieb eine zur Wechselspannung synchrone Bewegung ausführen, deren Drehzahl über die Polpaarzahl des Stators mit der Frequenz der Wechselspannung verknüpft ist. Somit ist der Betrieb eines permanenterregten Einphasen-Synchronmotors mit der Frequenz der Wechselspannung des Netzes sehr einfach möglich und es kann auf kostenintensive Steuerungen sowie Frequenzumrichter verzichtet werden. Vielmehr ist eine einfache Ansteuerung des Einphasen-Synchronmotors über eine H-Brücke ausreichend, welche von einer Steuerungseinheit betrieben werden kann. Dies kommt insbesondere einfachen Anwendungen ungeregelt mit konstanter Drehzahl wie z.B. bei Laugenpumpen in Waschmaschinen zugute.

Werden in einem Gerät mehrere derartige Einphasen-Synchronmotoren verwendet, beispielsweise in einer Waschmaschine ein erster Einphasen-Synchronmotor für die Umflutpumpe und ein zweiter Einphasen-Synchronmotor für die Laugenpumpe, so ist auch jeweils eine H-Brücke und eine Steuerungseinheit pro Einphasen-Synchronmotor erforderlich. Dies gilt entsprechend für andere Motoren und insbesondere für Synchronmotoren mit zwei Phasen oder drei Phasen bzw. Kombinationen hiervon, d.h. beispielsweise in einem Gerät mit einem Einphasen-Synchronmotor und einem Dreiphasen-Synchronmotor, welche jeweils eine eigene Drehstrombrücke und Steuerungseinheit benötigen, um gleichzeitig, d.h. parallel zueinander, betrieben werden zu können.

Nachteilig ist hieran, dass in jedem Fall die zusätzlichen Drehstrombrücken die Herstellungskosten hinsichtlich Material und Montageaufwand, den Platzbedarf im Gerät bzw. auf der Elektronik, den Stromverbrauch und bzw. oder die erzeugte Abwärme entsprechend erhöhen können.

Der Erfindung stellt sich somit das Problem, ein Antriebssystem der eingangs beschriebenen Art bereitzustellen, welches einen dreiphasigen Motor und einen einphasigen Motor gleichzeitig, d.h. parallel zueinander, mit einem geringeren elektronischen bzw. schaltungstechnischen Aufwand als bisher bekannt betreiben kann. Dies soll insbesondere kostengünstiger, bauraumsparender, energiesparender und bzw. oder mit einer geringeren Abwärme erfolgen können. Zumindest soll eine Alternative zu bekannten derartigen Antriebssystemen geschaffen werden.

Erfindungsgemäß wird dieses Problem durch ein Antriebssystem sowie durch ein Haushaltsgerät mit den Merkmalen der unabhängigen Ansprüche gelöst. Vorteilhafte Ausgestaltungen und Weiterbildungen der Erfindung ergeben sich aus den nachfolgenden Unteransprüchen.

Somit betrifft die Erfindung ein Antriebssystem mit einem dreiphasigen Motor, mit einem einphasigen Motor und mit einer Drehstrombrücke, welche ausgebildet ist, den dreiphasigen Motor und den einphasigen Motor zu speisen, wobei das Antriebssystem, vorzugsweise eine Steuerungseinheit des Antriebssystems, ausgebildet ist,
- den dreiphasigen Motor und den einphasigen Motor einzeln unter Volllast oder
- den dreiphasigen Motor und den einphasigen Motor gemeinsam jeweils unter Teillast
zu betreiben.

Erfindungsgemäß können somit mit derselben Drehstrombrücke sowohl ein dreiphasiger Motor als auch ein einphasiger Motor gleichzeitig, d.h. parallel zueinander bzw. gemeinsam, betrieben werden, so dass auf eine Drehstrombrücke oder dergleichen pro Motor verzichtet werden kann. Dies kann die gemeinsame Nutzung dieser beider Motoren mit vergleichsweise geringem Aufwand ermöglichen.

Gemäß einem Aspekt der Erfindung ist das Antriebssystem, vorzugweise die Steuerungseinheit des Antriebssystems, ferner ausgebildet,
- den dreiphasigen Motor unter Volllast zu betreiben und
- den dreiphasigen Motor und den einphasigen Motor aus dem Betrieb des dreiphasigen Motors unter Volllast in einen gemeinsamen Betrieb jeweils unter Teillast zu überführen, oder umgekehrt.

Dies kann einen Übergang von dem alleinigen Betrieb des dreiphasigen Motors unter Volllast in den gemeinsamen Betrieb beider Motoren unter Teillast, oder umgekehrt, ermöglichen, ohne einen Motor hierfür anhalten und anschließend erneut hochfahren zu müssen. Dies kann eine durchgängige Nutzung des Antriebssystems ohne Unterbrechung auch dann ermöglichen, wenn zwischen dem Volllast- und dem Teillastbetrieb umgeschaltet werden soll.

Gemäß einem weiteren Aspekt der Erfindung ist eine erste Phase der Drehstrombrücke mit einer ersten Phase des dreiphasigen Motors verbunden, eine zweite Phase der Drehstrombrücke ist mit einer zweiten Phase des dreiphasigen Motors und mit einer ersten Phase des einphasigen Motors verbunden und eine dritte Phase der Drehstrombrücke kann mittels eines Phasenumschalters, vorzugsweise mittels eines Phasen-Relais, zwischen einer dritten Phase des dreiphasigen Motors und einer zweiten Phase des einphasigen Motors umgeschaltet werden. Dies kann eine konkrete Möglichkeit der Umsetzung darstellen.

Gemäß einem weiteren Aspekt der Erfindung ist das Antriebssystem, vorzugweise die Steuerungseinheit des Antriebssystems, ferner ausgebildet,
- den dreiphasigen Motor unter Volllast zu betreiben,
- einen Nulldurchgang der Spannung der zweiten Phase der Drehstrombrücke zu erfassen,
- beim Nulldurchgang der Spannung der zweiten Phase der Drehstrombrücke, die Modulation des Sternpunktes an den drei Phasen der Drehstrombrücke um eine halbe Zwischenkreisspannung hoch- und runter zu modellieren,
- einen Nulldurchgang der Spannung der dritten Phase der Drehstrombrücke zu erfassen,
- beim Nulldurchgang der Spannung der dritten Phase der Drehstrombrücke, den dreiphasigen Motor mittels der ersten Phase und der zweiten Phase der Drehstrombrücke unter Teillast zu betreiben und
- den einphasigen Motor mittels der zweiten Phase und der dritten Phase der Drehstrombrücke hochzufahren und unter Teillast zu betreiben.

Dies kann eine konkrete Möglichkeit der Umsetzung darstellen.

Gemäß einem weiteren Aspekt der Erfindung ist das Antriebssystem, vorzugweise die Steuerungseinheit des Antriebssystems, ferner ausgebildet,
- beim Nulldurchgang der Spannung der dritten Phase der Drehstrombrücke ferner die dritte Phase der Drehstrombrücke mittels des Phasenumschalters, vorzugsweise mittels des Phasen-Relais, von der dritten Phase des dreiphasigen Motors auf die zweite Phase des einphasigen Motors umzuschalten.

Dies kann eine konkrete Möglichkeit der Umsetzung darstellen.

Gemäß einem weiteren Aspekt der Erfindung ist das Antriebssystem, vorzugweise die Steuerungseinheit des Antriebssystems, ferner ausgebildet,
- nach dem Nulldurchgang der Spannung der dritten Phase der Drehstrombrücke das Speisen der dritten Phase der Drehstrombrücke um eine vorbestimmte Zeitdauer zu verzögern, bis das Umschalten von der dritten Phase des dreiphasigen Motors auf die zweite Phase des einphasigen Motors abgeschlossen ist.

Dies kann eine konkrete Möglichkeit der Umsetzung darstellen.

Gemäß einem weiteren Aspekt der Erfindung ist das Antriebssystem, vorzugweise die Steuerungseinheit des Antriebssystems, ferner ausgebildet,
- den einphasigen Motor mittels der zweiten Phase und der dritten Phase der Drehstrombrücke hochzufahren, indem ein Ausrichten des einphasigen Motors mittels Gleichstrom und anschließend ein Erhöhen der Drehzahl des einphasigen Motors erfolgt.

Dies kann eine konkrete Möglichkeit der Umsetzung darstellen.

Gemäß einem weiteren Aspekt der Erfindung ist das Antriebssystem, vorzugweise die Steuerungseinheit des Antriebssystems, ferner ausgebildet,
- während des Betriebs des dreiphasigen Motors und des einphasigen Motors gemeinsam jeweils unter Teillast, einen Nulldurchgang der Spannung der dritten Phase der Drehstrombrücke zu erfassen,
- beim Nulldurchgang der Spannung der dritten Phase der Drehstrombrücke, das Speisen der dritten Phase der Drehstrombrücke zu unterbrechen,
- die dritte Phase der Drehstrombrücke mittels des Phasenumschalters, vorzugsweise mittels des Phasen-Relais, von der zweiten Phase des einphasigen Motors auf die dritte Phase des dreiphasigen Motors umzuschalten,
- bei einem nächsten Nulldurchgang der Spannung der dritten Phase der Drehstrombrücke, die Modulation des Sternpunktes an den drei Phasen der Drehstrombrücke um die volle Zwischenkreisspannung zu modellieren und
- den dreiphasigen Motor mittels der ersten Phase, der zweiten Phase und der dritten Phase der Drehstrombrücke unter Volllast zu betreiben.

Dies kann eine konkrete Möglichkeit der Umsetzung darstellen.

Gemäß einem weiteren Aspekt der Erfindung ist das Antriebssystem, vorzugweise die Steuerungseinheit des Antriebssystems, ferner ausgebildet,
- nach dem Nulldurchgang der Spannung der dritten Phase der Drehstrombrücke das Speisen der dritten Phase der Drehstrombrücke um eine vorbestimmte Zeitdauer zu verzögern, bis das Umschalten von der zweiten Phase des einphasigen Motors auf die dritte Phase des dreiphasigen Motors abgeschlossen ist.

Dies kann eine konkrete Möglichkeit der Umsetzung darstellen.

Gemäß einem weiteren Aspekt der Erfindung sind die drei Phasen der Drehstrombrücke mit einem Sternpunkt verbunden. Dies kann die Messung bzw. die Erfassung der Sternpunktspannung ermöglichen.

Gemäß einem weiteren Aspekt der Erfindung ist der dreiphasige Motor ein dreiphasiger Wechselstrommotor, vorzugsweise ein dreiphasiger Synchronmotoren. Dies kann die Umsetzung des Antriebssystems mit derartigen Motoren ermöglichen.

Gemäß einem weiteren Aspekt der Erfindung ist der einphasige Motor ein einphasiger Wechselstrommotor, vorzugsweise ein einphasiger Synchronmotoren. Dies kann die Umsetzung des Antriebssystems mit derartigen Motoren ermöglichen.

Die vorliegende Erfindung betrifft auch ein Haushaltsgerät, vorzugsweise eine Waschmaschine oder einen Geschirrspüler, mit wenigstens einem Antriebssystem wie zuvor beschrieben. Hierdurch können die Eigenschaften und die Vorteile eines erfindungsgemäßen Antriebssystems bei einem Haushaltsgerät umgesetzt und genutzt werden.

Ein Ausführungsbeispiel der Erfindung ist in den Zeichnungen rein schematisch dargestellt und wird nachfolgend näher beschrieben. Es zeigt
- Figur 1: ein Schaltungsbild eines erfindungsgemäßen Antriebssystems mit einem dreiphasigen Motor und mit einem einphasigen Motor an einer gemeinsamen Drehstrombrücke;
- Figur 2: einen zeitlichen Verlauf einer Phasenspannung des Sternpunktes und einer Umschaltung; und
- Figur 3: einen zeitlichen Verlauf eines Phasenstroms vor, während und nach der Umschaltung.

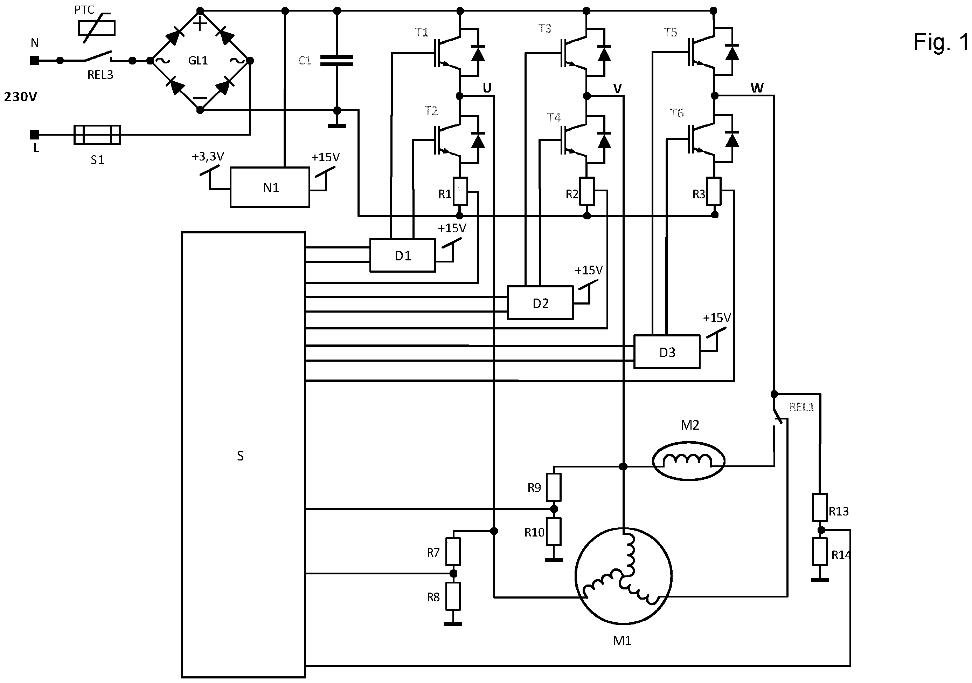

Figur 1 zeigt ein Schaltungsbild eines erfindungsgemäßen Antriebssystems. An einem Spannungseingang L, N wird eine Wechselspannung von 230V dem Antriebssystem zugeführt. Es folgt eine Sicherung S1 und parallel hierzu ein Kaltleiter PTC, welcher mittels eines parallelgeschalteten Kaltleiter-Schalters REL3 in Form eines Kaltleiter-Relais REL3 geschaltet oder getrennt werden kann. Dies kann seitens einer Steuerungseinheit S des Antriebssystems erfolgen, welche auch als Rechner S bezeichnet werden kann.

Die Wechselspannung des Spannungseingangs L, N wird über einen Gleichrichter GL1 in eine Gleichspannung als Zwischenkreisspannung gewandelt und dann mittels eines Glättungskondensators C1 geglättet. Es ist ferner ein Netzteil N1 mit einem Leiter des Zwischenkreises bzw. der Zwischenkreisspannung verbunden.

Die geglättete Zwischenkreisspannung speist eine Drehstrombrücke mit drei Paaren von Leistungshalbleitern T1-T6, welche jeweils einen Treiber D1-D3 und einen Messwiderstand R1-R3 in Form eines Shunt R1-R3 aufweisen. Die Treiber D1-D3 werden von der Steuerungseinheit S gesteuert und steuern ihrerseits jeweils die beiden Leistungshalbleiter T1-T6 pro Treiber D1-D3. Die Drehstrombrücke bzw. deren Paare von Leistungshalbleitern T1-T6 können somit eine erste Phase U, eine zweite Phase V und eine dritte Phase W erzeugen und hiermit einen dreiphasigen Motor M1 und einen einphasigen Motor M2 speisen bzw. betreiben.

Die erste Phase U der Drehstrombrücke ist mit einer ersten Phase des dreiphasigen Motors M1 verbunden. Die zweite Phase V der Drehstrombrücke mit einer zweiten Phase des dreiphasigen Motors M1 und mit einer ersten Phase des einphasigen Motors M2 verbunden. Die dritte Phase W der Drehstrombrücke kann mittels eines Phasenumschalters REL1 in Form eines Phasen-Relais REL1 zwischen einer dritten Phase des dreiphasigen Motors M1 und einer zweiten Phase des einphasigen Motors M2umgeschaltet werden. Es sind ferner ohmsche Widerstände R7-R14 vorhanden.

Das erfindungsgemäße Antriebssystem bzw. dessen Steuerungseinheit S ist ausgebildet ist, den dreiphasigen Motor M1 und den einphasigen Motor M2 einzeln, d.h. alternativ zueinander, unter Volllast zu betreiben. So kann jeder Motor M1, M2 mit seiner vollen Leistung genutzt und eingesetzt werden. Das erfindungsgemäße Antriebssystem bzw. dessen Steuerungseinheit S ist ferner ausgebildet, den dreiphasigen Motor M1 und den einphasigen Motor M2 gemeinsam, d.h. gleichzeitig bzw. parallel zueinander, jeweils unter Teillast zu betreiben. Dies lässt pro Motor einen Teil der Leistung ungenutzt, ermöglicht jedoch den Betrieb beider Motoren M1, M2 gleichzeitig, ohne pro Motor M1, M2 eine eigene Speisung und Steuerung wie insbesondere eine eigene Drehstrombrücke und Steuerungseinheit S pro Motor M1, M2 vorzusehen, was entsprechend Aufwand, Kosten, Bauraum sowie Energie sparen bzw. die Erzeugung von Abwärme reduzieren kann.

Insbesondere ist das erfindungsgemäße Antriebssystem bzw. dessen Steuerungseinheit S ferner ausgebildet, den dreiphasigen Motor M1 unter Volllast zu betreiben und den dreiphasigen Motor M1 und den einphasigen Motor M2 aus dem Betrieb des dreiphasigen Motors M1 unter Volllast in einen gemeinsamen Betrieb jeweils unter Teillast zu überführen, oder umgekehrt. Dies kann jeweils einen unterbrechungsfreien Betrieb des Antriebssystems ermöglichen.

In den meisten Fällen wird entweder der dreiphasige Motor M1 oder der einphasige Motor M2 betrieben, was je nach Relaisstellung des Phasen-Relais REL1 erfolgen kann.

Es ist aber ferner ein besonderer Betriebszustand möglich, bei dem der dreiphasige Motor M1 zweiphasig an den Phasen U und V der Drehstrombrücke und gleichzeitig der einphasige Motor M2 ebenfalls an den Phasen V und W der Drehstrombrücke betrieben wird. In diesem Fall wird der dreiphasige Motor M1 nur mit einer geringen Drehzahl und geringen Last betrieben. Auch der einphasige Motor M2 wird nur im Teillastbetrieb gefahren. Dennoch ist der Betrieb beider Motoren M1, M2 gleichzeitig möglich.

Die Herausforderung besteht darin, den dreiphasigen Motor M1 einerseits aus dem Dreiphasenbetrieb in den Zweiphasenbetrieb zu bringen, ohne dass signifikante Transienten entstehen. Dies kann z. B. die Drehzahl sein, die bis zum Stillstand absinken kann. Andererseits können auch Stromspitzen entstehen, sodass die Überstromabschaltung ausgelöst werden kann und damit eine Abschaltung vorgenommen wird. Andererseits muss ebenso das Zurückschalten vom zweiphasigen Betrieb in den dreiphasigen Betrieb des dreiphasigen Motors M1 erfolgen, ohne signifikante transiente Vorgänge.

Es muss eine bestimmte wie folgt Reihenfolge beachtet werden, damit beide Umschaltungen einwandfrei funktionieren.

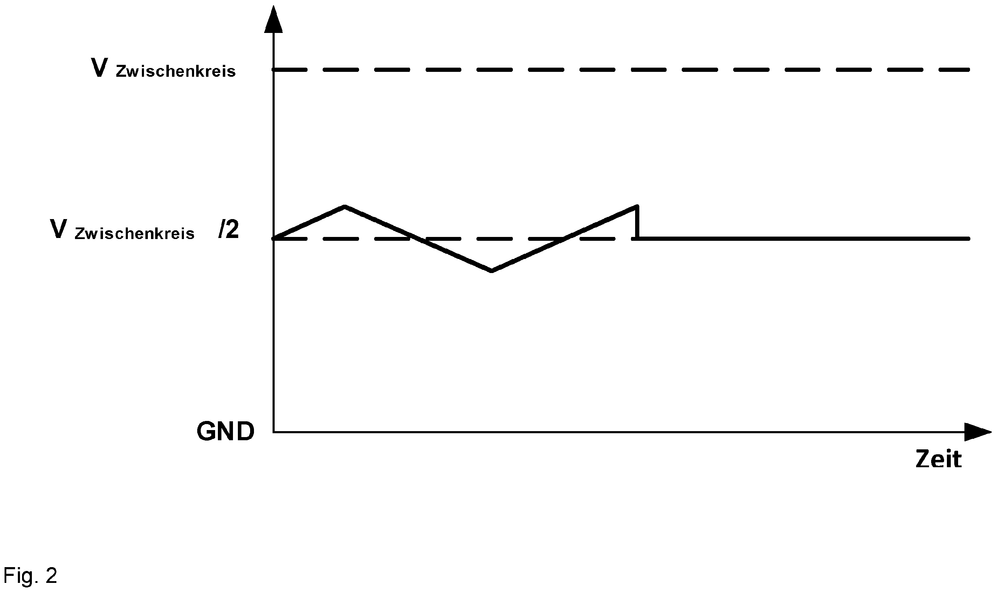

Sobald die Anforderung kommt, den einphasigen Motor M2 zuzuschalten, wird erst einmal auf den Spannungsnulldurchgang der zweiten Phase V der Drehstrombrücke gewartet (ggü Sternpunkt). Wenn dieser erreicht ist, wird die Modulation des Sternpunktes umgeschaltet. Wenn der dreiphasige Motor M1 im dreiphasigen Betrieb läuft, so wird die Spannung an den drei Phasen U, V, W der Drehstrombrücke so moduliert, dass der Sternpunkt des dreiphasigen Motors M1 bzw. der fiktive Sternpunkt des dreiphasigen Motors M1 im Dreieck um die halbe Zwischenkreisspannung (Spannung an Glättungskondensator C1) der Drehstrombrücke hoch und runtermoduliert wird. Zu dem genannten Zeitpunkt wird die dreiphasige Modulation so geändert, dass der Sternpunkt nicht mehr im Dreieck um die halbe Zwischenkreisspannung der Drehstrombrücke wandert, sondern fix auf der halben Zwischenkreisspannung verharrt, siehe Figur 2. Statt der Symmetrierung (dreieckförmiger Verlauf) kann auch die dritte Oberschwingung verwendet werden (sinusförmiger Verlauf).

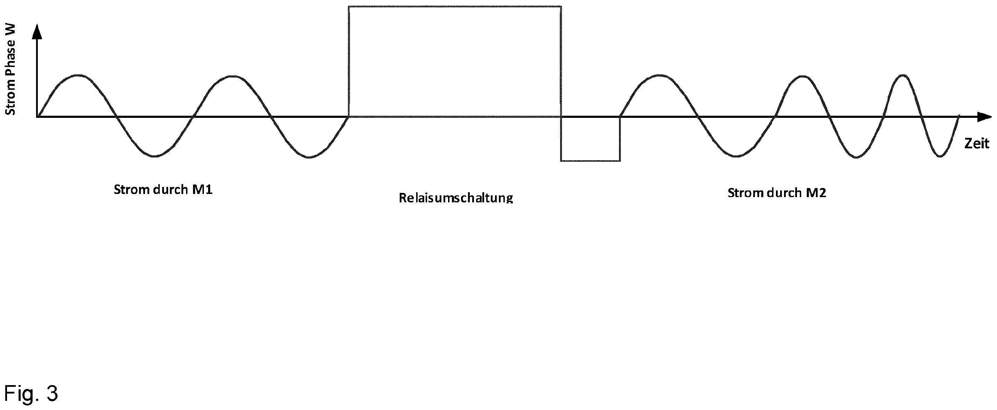

Dann wird auf den Stromnulldurchgang in dritten Phase W der Drehstrombrücke gewartet. Sobald dieser erreicht ist, wird die dritte Phase W der Drehstrombrücke abgeschaltet. Als nächstes wird das Phasen-Relais REL1 angesteuert, welches den Motor M2 an der dritten Phase W der Drehstrombrücke zuschaltet. Die Figur 3 zeigt den prinzipiellen Verlauf der Stromführung in Phase W der Drehstrombrücke bei der Umschaltung vom dreiphasigen Motor M1 zum einphasigen Motor M2.

Abschalten der dritten Phase W der Drehstrombrücke bedeutet, dass die beiden Leistungshalbleiter T5, T6 ausgeschaltet werden. Dadurch wird die Spannung der dritten Phase W der Drehstrombrücke abgeschaltet und der Strom bleibt Null. Für diesen Zweck muss der Stromnulldurchgang sauber erfasst und rechtzeitig abgeschaltet werden. Dann muss ohne Wartezeit das Phasen-Relais umgeschaltet werden.

Dazu wird das Phasen-Relais REL1 seitens der Steuerungseinheit S angesteuert, damit der mechanische Kontakt seine Stellung wechselt. Es wird umgeschaltet von dem dreiphasigen Motor M1 auf den einphasigen Motor M2. Während des Schaltvorgangs fließt in der Phase W der Drehstrombrücke somit kein Strom.

Der in der Figur 3 angedeutete Block soll nur zeigen, dass die Relaisumschaltung eine bestimmte Zeit benötigt. Deswegen wird entsprechend gewartet. Weil der mechanische Kontakt des Phasen-Relais REL1 prellt, braucht es eine bestimmte Mindestzeit, bis eine sichere Umschaltung gewährleistet ist. Wenn mit der Ansteuerung des einphasigen Motors M2 zu früh begonnen wird, kann es zu einem Abbruch im Hochlauf kommen, weil der mechanische Kontakt noch keine dauerhafte elektrische Verbindung zwischen dem einphasigen Motor M2 und der dritten Phase W der Drehstrombrücke ermöglicht.

Nach dieser Mindestzeit, die als Block im Zeitdiagramm der Figur 3 dargestellt ist, wird mit der Ansteuerung des einphasigen Motors M2 begonnen. Dieser wird erst mit einem DC-Strom ausgerichtet und anschließend über einen Wechselstrom langsam in seiner Drehzahl hochgefahren. Das Phasen-Relais REL1 wird weiterhin in dieser Stellung belassen, so lange wie der einphasige Motor M2 läuft.

Wenn wieder zurückgeschaltet werden soll, also der einphasige Motor M2 abgeschaltet und der dreiphasige Motor M1 wieder in den dreiphasigen Betrieb kommen soll, sieht die Umschaltreihenfolge wie folgt aus.

Als erstes wird gewartet, bis der Strom von der dritten Phase W der Drehstrombrücke seinen Nulldurchgang hat. Dann wird die dritte Phase W der Drehstrombrücke stromlos geschaltet. Beide Leistungshalbleiter T5, T6 werden hierzu abgeschaltet. Dann wird das Phasen-Relais REL1 umgeschaltet und abgewartet, bis der mechanische Kontakt sicher umgeschaltet hat.

Dann wird auf den Nulldurchgang der Spannung in dritten Phase W der Drehstrombrücke gewartet. Da der dreiphasige Motor M1 läuft, wird in diesem Zeitraum über die Drehung des Rotors des dreiphasigen Motors M1 eine Spannung in die unbestromte Phase von des dreiphasigen Motors M1 induziert. Diese Spannung wird nun gemessen und abgewartet, bis sie einen Nulldurchgang (gegenüber dem errechneten Sternpunkt) hat. Dann wird von der zweiphasigen Modulation des dreiphasigen Motors M1 in die dreiphasige Modulation des dreiphasigen Motors M1 gewechselt. In diesem Zuge wird auch die Modulation des Sternpunktes wieder umgestellt von dem fixen Verbleiben auf der halben Zwischenkreisspannung auf die Dreiecksmodulation um die halbe Zwischenkreisspannung herum.

Bei den beschriebenen Umschaltvorgängen ist es wichtig, dass die beschriebene Reihenfolge und das Abwarten der genannten Zustände eingehalten werden, damit das Umschalten der Motoren M1, M2 ohne signifikante transiente Vorgänge erfolgt.

### Bezugszeichenliste (Bestandteil der Beschreibung)

- C1: Glättungskondensator
- D1-D3: Treiber
- GL1: Gleichrichter
- L, N: Spannungseingang
- N1: Netzteil
- M1: dreiphasiger Motor
- M2: einphasiger Motor
- PTC: Kaltleiter
- R1-R3: Messwiderstände; Shunts
- R7-R14: ohmsche Widerstände
- REL1: Phasenumschalter; Phasen-Relais
- REL3: Kaltleiter-Schalter; Kaltleiter-Relais
- S: Steuerungseinheit; Rechner
- S1: Sicherung
- T1-T6: Leistungshalbleiter
- U: erste Phase
- V: zweite Phase
- W: dritte Phase

## Patentansprüche

1. Antriebssystem
mit einem dreiphasigen Motor (M1),
mit einem einphasigen Motor (M2) und
mit einer Drehstrombrücke, welche ausgebildet ist, den dreiphasigen Motor (M1) und den einphasigen Motor (M2) zu speisen,
wobei das Antriebssystem, vorzugweise eine Steuerungseinheit des Antriebssystems, ausgebildet ist,
• den dreiphasigen Motor (M1) und den einphasigen Motor (M2) einzeln unter Volllast oder
• den dreiphasigen Motor (M1) und den einphasigen Motor (M2) gemeinsam jeweils unter Teillast
zu betreiben.

2. Antriebssystem nach Anspruch 1,
wobei das Antriebssystem, vorzugweise die Steuerungseinheit des Antriebssystems, ferner ausgebildet ist,
• den dreiphasigen Motor (M1) unter Volllast zu betreiben und
• den dreiphasigen Motor (M1) und den einphasigen Motor (M2) aus dem Betrieb des dreiphasigen Motors (M1) unter Volllast in einen gemeinsamen Betrieb jeweils unter Teillast zu überführen, oder umgekehrt.

3. Antriebssystem nach Anspruch 1 oder 2,
wobei eine erste Phase (U) der Drehstrombrücke mit einer ersten Phase des dreiphasigen Motors (M1) verbunden ist,
wobei eine zweite Phase (V) der Drehstrombrücke mit einer zweiten Phase des dreiphasigen Motors (M1) und mit einer ersten Phase des einphasigen Motors (M2) verbunden ist und
wobei eine dritte Phase (W) der Drehstrombrücke mittels eines Phasenumschalters (REL1), vorzugsweise mittels eines Phasen-Relais (REL1), zwischen einer dritten Phase des dreiphasigen Motors (M1) und einer zweiten Phase des einphasigen Motors (M2) umgeschaltet werden kann.

4. Antriebssystem nach Anspruch 3,
wobei das Antriebssystem, vorzugweise die Steuerungseinheit des Antriebssystems, ferner ausgebildet ist,
• den dreiphasigen Motor (M1) unter Volllast zu betreiben,
• einen Nulldurchgang der Spannung der zweiten Phase (V) der Drehstrombrücke zu erfassen,
• beim Nulldurchgang der Spannung der zweiten Phase (V) der Drehstrombrücke, die Modulation des Sternpunktes an den drei Phasen (U, V, W) der Drehstrombrücke um eine halbe Zwischenkreisspannung hoch- und runter zu modellieren,
• einen Nulldurchgang der Spannung der dritten Phase (W) der Drehstrombrücke zu erfassen,
• beim Nulldurchgang der Spannung der dritten Phase (W) der Drehstrombrücke, den dreiphasigen Motor (M1) mittels der ersten Phase (U) und der zweiten Phase (V) der Drehstrombrücke unter Teillast zu betreiben und
• den einphasigen Motor (M2) mittels der zweiten Phase (V) und der dritten Phase (W) der Drehstrombrücke hochzufahren und unter Teillast zu betreiben.

5. Antriebssystem nach Anspruch 4,
wobei das Antriebssystem, vorzugweise die Steuerungseinheit des Antriebssystems, ferner ausgebildet ist,
• beim Nulldurchgang der Spannung der dritten Phase (W) der Drehstrombrücke ferner die dritte Phase (W) der Drehstrombrücke mittels des Phasenumschalters (REL1), vorzugsweise mittels des Phasen-Relais (REL1), von der dritten Phase des dreiphasigen Motors (M1) auf die zweite Phase des einphasigen Motors (M2) umzuschalten.

6. Antriebssystem nach Anspruch 5,
wobei das Antriebssystem, vorzugweise die Steuerungseinheit des Antriebssystems, ferner ausgebildet ist,
• nach dem Nulldurchgang der Spannung der dritten Phase (W) der Drehstrombrücke das Speisen der dritten Phase (W) der Drehstrombrücke um eine vorbestimmte Zeitdauer zu verzögern, bis das Umschalten von der dritten Phase des dreiphasigen Motors (M1) auf die zweite Phase des einphasigen Motors (M2) abgeschlossen ist.

7. Antriebssystem nach einem der Ansprüche 4 bis 6,
wobei das Antriebssystem, vorzugweise die Steuerungseinheit des Antriebssystems, ferner ausgebildet ist,
• den einphasigen Motor (M2) mittels der zweiten Phase (V) und der dritten Phase (W) der Drehstrombrücke hochzufahren, indem ein Ausrichten des einphasigen Motors (M2) mittels Gleichstrom und anschließend ein Erhöhen der Drehzahl des einphasigen Motors (M2) erfolgt.

8. Antriebssystem nach einem der Ansprüche 4 bis 7,
wobei das Antriebssystem, vorzugweise die Steuerungseinheit des Antriebssystems, ferner ausgebildet ist,
• Während des Betriebs des dreiphasigen Motors (M1) und des einphasigen Motors (M2) gemeinsam jeweils unter Teillast, einen Nulldurchgang der Spannung der dritten Phase (W) der Drehstrombrücke zu erfassen,
• beim Nulldurchgang der Spannung der dritten Phase (W) der Drehstrombrücke, das Speisen der dritten Phase (W) der Drehstrombrücke zu unterbrechen,
• die dritte Phase (W) der Drehstrombrücke mittels des Phasenumschalters (REL1), vorzugsweise mittels des Phasen-Relais (REL1), von der zweiten Phase des einphasigen Motors (M2) auf die dritte Phase des dreiphasigen Motors (M1) umzuschalten,
• bei einem nächsten Nulldurchgang der Spannung der dritten Phase (W) der Drehstrombrücke, die Modulation des Sternpunktes an den drei Phasen (U, V, W) der Drehstrombrücke um die volle Zwischenkreisspannung zu modellieren und
• den dreiphasigen Motor (M1) mittels der ersten Phase (U), der zweiten Phase (V) und der dritten Phase (W) der Drehstrombrücke unter Volllast zu betreiben.

9. Antriebssystem nach Anspruch 8,
wobei das Antriebssystem, vorzugweise die Steuerungseinheit des Antriebssystems, ferner ausgebildet ist,
• nach dem Nulldurchgang der Spannung der dritten Phase (W) der Drehstrombrücke das Speisen der dritten Phase (W) der Drehstrombrücke um eine vorbestimmte Zeitdauer zu verzögern, bis das Umschalten von der zweiten Phase des einphasigen Motors (M2) auf die dritte Phase des dreiphasigen Motors (M1) abgeschlossen ist.

10. Antriebssystem (1) nach einem der Ansprüche 3 bis 9,
wobei die drei Phasen (U, V, W) der Drehstrombrücke mit einem Sternpunkt verbunden sind.

11. Antriebssystem nach einem der vorangehenden Ansprüche,
wobei der dreiphasige Motor (M1) ein dreiphasiger Wechselstrommotor (M1), vorzugsweise ein dreiphasiger Synchronmotoren (M1), ist.

12. Antriebssystem nach einem der vorangehenden Ansprüche,
wobei der einphasige Motor (M2) ein einphasiger Wechselstrommotor (M2), vorzugsweise ein einphasiger Synchronmotoren (M2), ist.

13. Haushaltsgerät, vorzugsweise Waschmaschine oder Geschirrspüler,
mit wenigstens einem Antriebssystem nach einem der vorangehenden Ansprüche.
